(19) Europäisches Patentamt
European Patent Office
Office européen des brevets

(11) EP 2 079 211 A1

(12) **EUROPEAN PATENT APPLICATION**
published in accordance with Art. 153(4) EPC

(43) Date of publication:
**15.07.2009 Bulletin 2009/29**

(51) Int Cl.:
*H04L 27/00* (2006.01)

(21) Application number: **07830267.6**

(22) Date of filing: **22.10.2007**

(86) International application number:
**PCT/JP2007/070533**

(87) International publication number:
**WO 2008/053731 (08.05.2008 Gazette 2008/19)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **30.10.2006 JP 2006294238**

(71) Applicant: **Kyocera Corporation**
**Kyoto-shi**
**Kyoto 612-8501 (JP)**

(72) Inventors:
• **FUKUMURA, Yukio**
**Yokohama-shi**
**Kanagawa 2248502 (JP)**
• **TONG, Fangwei**
**Yokohama-shi**
**Kanagawa 2248502 (JP)**

(74) Representative: **Elkiner, Kaya et al**
**Keltie**
**Fleet Place House**
**2 Fleet Place**
**London EC4M 7ET (GB)**

(54) **WIRELESS COMMUNICATION METHOD AND APPARATUS THEREOF**

(57)    A wireless communication method for a wireless communication apparatus to communicate wirelessly with a corresponding wireless communication apparatus with adaptively selecting a modulation scheme from a plurality of modulation schemes, comprising: a step of grasping a quality of a received signal; a step of selecting a first modulation scheme based on the grasped quality of the received signal; a step of calculating a retransmission rate of received signals in the first modulation scheme; a step of determining an estimated throughput from the calculated retransmission rate based on relations between throughput and retransmission rate; a step of comparing the estimated throughout with a throughput in a second modulation scheme having a smaller multi-value number than that in the first modulation scheme; and a step of performing wireless communication in either the first modulation scheme or the second modulation scheme depending on the comparison result.

FIG. 3

## EP 2 079 211 A1

**Description**

CROSS REFERENCE TO RELATED APPLICATION

This application claims priority to and the benefit of Japanese Patent Application No. 2006-294238 filed on October 30, 2006, the entire content of which is incorporated herein by reference.

TECHNICAL FIELD

The present invention relates to a wireless communication method and a wireless communication apparatus for carrying out the method, and more particularly to a wireless communication method capable of maintaining throughput at a maximum in wireless communication using an adaptive modulation scheme and an apparatus therefor.

BACKGROUND ART

In wireless communication, the transmission quality easily varies depending on time due to an effect of fading, rain or the like. For example, the reception power becomes less in an environment abounding with noise and interference waves, so that signals are more easily affected by noise and thus the transmission quality deteriorates. Then, an adaptive modulation scheme is conventionally proposed in order to deal with the above time-dependent variation of transmission quality.

In the adaptive modulation scheme, the transmission efficiency is preferential when the transmission quality is favorable. Therefore, data is transmitted using a modulation scheme requiring more reception power per 1 bit and having a larger multi-value number - i.e., a higher throughput modulation scheme such as 16QAM (Quadrature Amplitude Modulation) which is 16-value modulation mapping 4 bits on a complex plane. As a result, a large volume of coded data can be transmitted within a short time.

On the other hand, when data is transmitted in a modulation scheme having a larger multi-value number under a condition in which the transmission quality is deteriorated, transmission errors increase due to noise and the like, which deteriorates the transmission efficiency. In this case, therefore, the resistance to such errors is preferential and thus data is transmitted using QPSK (Phase Shift Keying) as 4-value modulation mapping 2 bits on a complex plane or BPSK as binary modulation, both of which require less reception power. As above, even when the transmission quality is deteriorated, it is possible, by adaptively selecting a modulation scheme achieving adequate throughput, to transmit data with fewer errors and thus to keep the transmission efficiency favorable.

Table 1 shows various adaptive modulation schemes in descending order of throughput achieved thereby. The table assumes communication between a base station and a mobile terminal, in which a signal from the base station to the mobile terminal is a downlink signal and a signal from the mobile terminal to the base station is an uplink signal. It is noted that the values in the table are of one example and not particularly limited thereto.

Table 1

| Multi-value number | Modulation scheme | Throughput (downlink) (kbps) | Throughput (uplink) (kbps) |
|---|---|---|---|
| 2 | BPSK | Low ↑ about 480 ↓ High | Low ↑ about 170 ↓ High |
| 4 | QPSK | | |
| 8 | 8PSK | | |
| 12 | 12QAM | | |
| 16 | 16QAM | | |
| 24 | 24QAM | | |

As an conventional art using the above adaptive modulation scheme is proposed a technique in which the communication quality and a propagation path condition are estimated, and then, according to the estimated propagation path condition, the length of averaging interval for calculating the communication quality and a method of estimating the communication quality are selected and a threshold determining the modulation method is adjusted so as to select a modulation scheme (refer to Patent Document 1).

In this conventional method, a modulation scheme is selected according to a propagation path. However, the selected modulation scheme does not directly relate to throughput which is a final indicator in communication system and thus an inadequate modulation scheme may be selected. It is supposed, for example, that a propagation path

2

condition is estimated to be deteriorated by the conventional method of estimating a propagation path and a modulation scheme having a smaller multi-value number is thus selected. However, the modulation scheme having a large multi-value number originally achieves high throughput, and thus the throughput is not necessarily lower than that in a modulation scheme having a smaller multi-value number even when the deterioration of propagation path condition degrades a reception condition.

Moreover, it is also possible that the conventional method estimates a propagation path condition wrongly, so that an inadequate modulation scheme is selected. When a propagation path is estimated from fading pitch explained in JP-A-2005-318533, for example, it is possible that the propagation path condition is wrongly estimated since the fading pitch is basically of random phenomenon and varies over time even in a same propagation path. In order to reduce the effect by the variation of fading pitch, there can be used a method in which the length of averaging interval is extended. However, it is still possible that the variation is not promptly reflected when a mobile terminal moves at high speed, so that the propagation path condition is wrongly estimated.

When a propagation path is estimated from fading pitch, moreover, received signals are divided into a plurality of blocks and errors or pseudo errors are calculated in each block. Therefore, there is a disadvantage that such calculation becomes complicated and the power consumption thus increases.

Patent Document 1: Japanese Patent Laid-Open No. 2005-318533

DISCLOSURE OF THE INVENTION

PROBLEMS TO BE SOLVED BY THE INVENTION

An object of the invention is to provide a wireless communication method solving the above problems, maintaining throughput at a maximum in a wireless communication method using the adaptive modulation scheme and being easily attained since the estimation of propagation path is not necessary and the calculation is thus simplified, as well as reducing the power consumption, and a wireless communication apparatus for carrying out the method.

SUMMARY OF THE INTENTION

To achieve the above object, a wireless communication method according to the invention is:

a wireless communication method for a wireless communication apparatus to communicate wirelessly with a corresponding wireless communication apparatus with adaptively selecting a modulation scheme from a plurality of modulation schemes, comprising:

(with use of an operation unit (CPU or the like);)
(a step of receiving signals in a reception unit;)
a step of grasping a quality of received signal;
a step of selecting a first modulation scheme based on the grasped quality of the received signal;
a step of calculating a retransmission rate of received signals in the first modulation scheme;
a step of determining an estimated throughput from the calculated retransmission rate based on relations between throughput and retransmission rate;
a step of comparing the estimated throughput with a throughput in a second modulation scheme having a smaller multi-value number than that in the first modulation scheme; and
a step of performing wireless communication in either the first modulation scheme or the second modulation scheme depending on the comparison result.

Furthermore, a wireless communication method of an embodiment of the invention is **characterized in that** wireless communication is performed in the second modulation scheme when the comparison result shows that the estimated throughput is lower than the maximum throughput in the second modulation scheme.

There has been described the solution means of the invention as a method. However, the invention can also be implemented as an apparatus for carrying out such method and thus it will be understood that these also fall within the scope of the invention.

For example, a wireless communication apparatus of another embodiment of the invention achieved as an apparatus is as follows:

A wireless communication apparatus communicating wirelessly with a corresponding wireless communication apparatus with adaptively selecting a modulation scheme from a plurality of modulation schemes, comprising:

(an operation unit (CPU or the like); )

(a reception unit receiving signals transmitted from a corresponding wireless communication apparatus; )

a signal quality grasping unit grasping (estimating) a quality of a received signal based thereon;

a first selection unit selecting a first modulation scheme based on the quality of the received signal grasped by the signal quality grasping unit;

a retransmission rate calculation unit calculating a retransmission rate of received signals in the first modulation scheme;

a throughput estimating unit determining an estimated throughput from the retransmission rate calculated by the retransmission rate calculation unit based on relations between throughput and retransmission rate;

a comparison unit comparing the estimated throughput estimated by the throughput estimating unit with a throughput in a second modulation scheme having a smaller multi-value number than that in the first modulation scheme; and

a second selection unit selecting either the first modulation scheme or the second modulation scheme based on the comparison result.

EFFECT OF THE INVENTION

The invention makes it possible to provide wireless communication techniques (method and apparatus) using an adaptive modulation scheme which maintains throughput at a maximum as to a propagation path where the transmission quality varies depending on time due to fading, rain or the like.

BRIEF DESCRIPTION OF DRAWINGS

FIG. 1 is a block diagram showing a configuration of the wireless communication apparatus according to the invention.
FIG. 2 is a schematic view of a map relating retransmission rate to throughput.
FIG. 3 is a flow chart showing a control process in the modulation scheme request unit in the wireless communication apparatus.

DESCRIPTION OF EMBODIMENTS

The invention will be described in detail with reference to the accompanying drawings. The communication between a base station and a mobile terminal is supposed as a typical example, in which a signal from the base station to the mobile terminal is referred to as a downlink signal and a signal from the mobile terminal to the base station is referred to as an uplink signal.

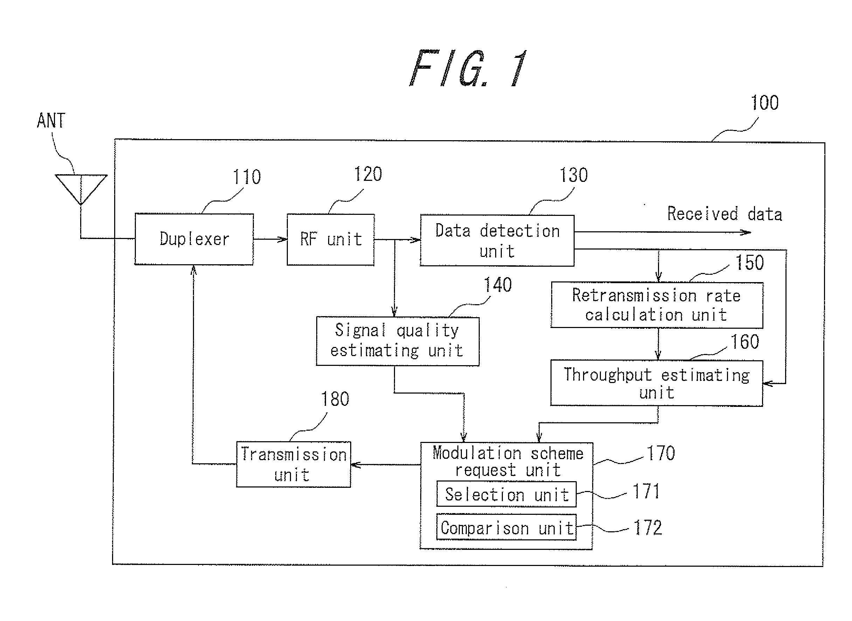

FIG. 1 is a block diagram showing a configuration of the wireless communication apparatus of the embodiment. A wireless communication apparatus 100 shown in FIG. 1 comprises a duplexer 110, an RF unit 120, a data detection unit 130, a signal quality estimating unit 140, a retransmission rate calculation unit 150, a throughput estimating unit 160, a modulation scheme request unit 170, a transmission unit 180 and an antenna ANT. Furthermore, the modulation scheme request unit 170 is provided with a selection unit 171 and a comparison unit 172.

There will be described functions of each block in FIG. 1 of the block diagram and a summary of the communication apparatus of the invention. The duplexer (transmission-reception switching device) 110 switches the antenna ANT between transmission and reception. The RF unit 120 converts a received high-frequency signal to an adequate frequency (baseband in general) to perform digitalization. The data detection unit 130 detects a received signal and outputs information about frame reception failure and a currently-adopted modulation scheme to the retransmission rate calculation unit 150 and the throughput estimating unit 160. The signal quality estimating unit 140 estimates (grasps) the quality of received signals. There are a number of methods for estimating the quality of received signals, and for example, one of them is based on the following formula:

$$SINR = \frac{\left[\frac{1}{N}\sum_{i=1}^{N}U(i)R^*(i)\right]^2}{\frac{1}{N}\sum_{k=1}^{N}\left[U(k)R^*(k)-\frac{1}{N}\sum_{i=1}^{N}U(i)R^*(i)\right]^2}$$ (1)

wherein SINR is an indicator representing the quality of a received signal (Signal to Interference and Noise Ratio), U(i), i=1, ..., and N are known portions in a received signal frame, R(i), i=1, ..., and N are reference signals and * is a complex number conjugate.

In the invention, therefore, the quality of received signals is estimated according not to a propagation path but to a reception condition, and then a request for an adequate modulation scheme (first modulation scheme) is made to a transmitting side based on results of the estimation. This estimation uses known portions in a received frame (or a received slot; hereinafter referred to equally as a frame without distinguishing between a frame and a slot), namely data received without errors. As above, a reception condition is estimated using the known portions in a received frame. When a mobile terminal moves at high speed, therefore, even if signals in a same reception frame vary with an elapse of time, the variation can not be reflected so that there is a possibility that the quality of required received signals in a requested modulation scheme cannot be satisfied. In this case, the data reception is failed, causing data errors and losses. In a communication scheme where error data is retransmitted so as to correct such errors, retransmitted data is transmitted with new data, which decreases substantial throughput.

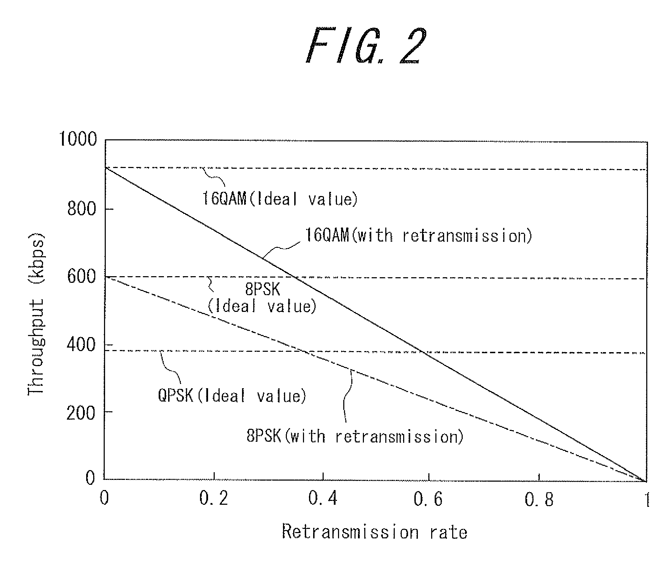

FIG. 2 is a diagram showing relations between retransmission rate and throughput when retransmission is requested. The relations are shown in a calculation formula or a map relating retransmission rate to throughput. The dotted lines in FIG. 2 show throughput without retransmission in case of 16QAM, 8PSK and QPSK among modulation schemes shown in Table 1. The solid line and the dash dotted line show the variation of throughput with retransmission in case of 16QAM and 8PSK respectively. It is noted that FIG. 2 is a diagram showing the deterioration of throughput due to retransmission and the shown values are not particularly limited thereto.

The retransmission rate calculation unit 150 uses information of reception failure from the data detection unit 130 and calculates a retransmission rate, namely a ratio of the number of frames failed to be received to the total number of frames, based on the following formula:

$$\text{Retransmission rate} = \frac{\text{Number of frames failed to be received}}{\text{Total number of frames}}$$ (2)

According to FIG. 2, when the retransmission rate is about 0.4 (e. g., retransmission is requested after 4 out of 10 frames are failed to be received), for example, the throughput is substantially the same as in a modulation scheme having a one-level smaller multi-value number. That is, in this state the transmission efficiency is more favorable when used a modulation scheme having a one-level smaller multi-value number and requiring less power.

According to FIG. 2, the throughput when the retransmission rate is about 0.4 is substantially the same as the throughput in a modulation scheme having a one-level smaller multi-value number. Thus, as a criterion for switching modulation schemes, it may be available to know whether the retransmission rate is equal to or greater than 0.4 or not. Therefore, the retransmission rate may be calculated for every 2-5 frames. That is, "Total number of frames" in the denominator of the formula (2) may be set to 2-5 frames. As above, one of merits of the present invention lies in calculation involving fewer calculation frames.

The throughput estimating unit 160 estimates current throughput from a current modulation scheme (first modulation scheme) and retransmission rate input from the data detection unit 130 and the retransmission rate calculation unit 150 respectively, based on relations shown in FIG. 2. When the current modulation scheme is 16QAM and the retransmission rate is 0. 4, for example, the throughput is estimated to be about 550 kbps. The modulation scheme request unit 170 selects the most adequate modulation scheme according to the quality of received signals and the retransmission rate input respectively from the signal quality estimating unit 140 and the retransmission rate calculation unit 150, and transmits a request for the selected modulation scheme to a base station via the transmission unit 180. The base station transmits a downlink signal to be transmitted next, to a mobile terminal (not shown) using the requested modulation scheme. The operation in the modulation scheme request unit 170 will be described in detail with reference to a flow chart. The transmission unit 180 forms transmitted data as transmission frames, changes frequency up to transmission frequency and outputs the transmission frames into the duplexer 110.

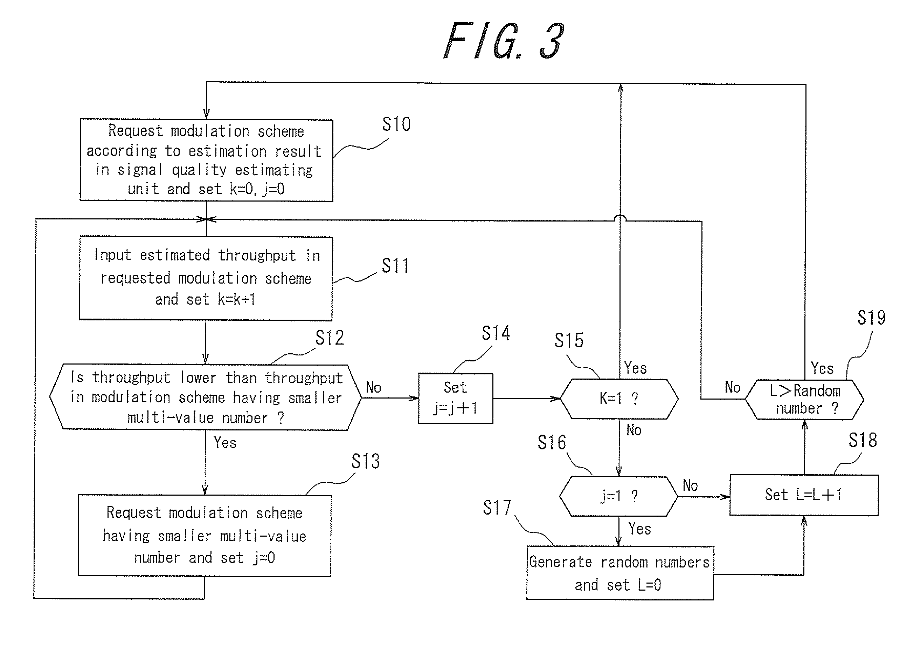

Next, the operation in the modulation scheme request unit 170 will be described in detail with reference to a flow chart. FIG. 3 is a flow chart of the modulation scheme request unit 170. First, the modulation scheme request unit 170 selects an adequate modulation scheme (first modulation scheme) in the selection unit 171 according to the quality of received signals estimated by the signal quality estimating unit 140 and transmits the request to the base station, as well as resetting control variables j and k to 0 (Step S10). Then, the modulation scheme request unit 170 inputs throughput estimated by the throughput estimating unit 160 in a requested modulation scheme and sets k=k+1 (Step S11). In Step S12, the comparison unit 172 compares and determines whether the estimated throughput is lower than that in a modulation scheme having a one-level smaller multi-value number (second modulation scheme) than that in a current modulation scheme. The determination is performed by using the map of FIG.2 relating retransmission rate to throughout, or a calculation formula. When the determination result shows that the estimated throughout is lower than ideal throughput (maximum throughput) in a modulation scheme having a one-level smaller multi-value number (second modulation scheme) than that in a current modulation scheme, the modulation scheme request unit 170 outputs data requesting the modulation scheme having a one-level smaller multi-value number into the transmission unit 180 and resets j to 0 (Step S13). Subsequently, the process returns to Step S11. There will be described a determination method in Step S12. When a current modulation scheme is 16 QAM, for example, in the map of FIG. 2, the throughput with retransmission in case of 16 QAM is substantially the same as the ideal throughput in a modulation scheme having a one-level smaller multi-value number when the retransmission rate is about 0.4. In this state, a probability of occurrence of data losses and errors is high even when data is transmitted in the current modulation scheme, which deteriorates the transmission efficiency. Therefore, the transmission efficiency is favorable when used a modulation scheme having a one-level smaller multi-value number (BPSK) whose ideal throughput is close to the throughput of the propagation path and which requires less power.

When the determination result in Step S12 shows that ideal throughput in a modulation scheme having a one-level smaller multi-value number (second modulation scheme) than that in a current modulation scheme (first modulation scheme) is lower than the estimated throughput, the modulation scheme request unit 170 adds 1 to j and then determines whether k=1 or not (Step S14, S15). The state shown as k=1 means that the process has never passed Step S 13 which "requests a modulation scheme having a smaller multi-value number" and thus the estimated throughput in a current modulation scheme is higher than throughput in a modulation scheme having a one-level smaller multi-value number. That is, it is meant that the current modulation scheme (the modulation scheme requested based on the quality of received signals estimated by the signal quality estimating unit 140) is more adequate for transmission. In this case, the modulation scheme request unit 170 can request a modulation scheme based on the quality of received signals estimated by the signal quality estimating unit 140 and thus the process returns to Step S10. When k≠1 (k>1) is set in Step S15, it is meant that the retransmission rate is high and there is requested a modulation scheme having a one-level smaller multi-value number than that in a modulation scheme requested in the modulation scheme request unit 170 based on the quality of received signals estimated by the signal quality estimating unit 140 (i. e., it is meant that the process has passed Step S 13).

Furthermore, the modulation scheme request unit 170 determines whether j=1 or not in Step S16. When j=1 is set, it is meant that in Step S12, it is determined that the estimated throughput is lower than the ideal throughput in a modulation scheme having a one-level smaller multi-value number than that in a current modulation scheme, and that it is determined for the first time in Step S12, after the process has passed Step S13 and returned to Step S11, that the estimated throughput is higher than ideal throughput in a modulation scheme having a one-level smaller multi-value number than that in a current modulation scheme. In this case, the modulation scheme request unit 170 generates random numbers within a certain range (1 to 100, for example) and resets control variable L to 0 (Step S 17). Then, the modulation scheme request unit 170 sets L=L+1 and compares the value with the random numbers (Step S18, S19). When "L>random number value" is determined in Step S 19, it is meant that, in a modulation scheme requested in Step S 13, the estimated throughput is higher, at the number of times of the random number in Step S12, than ideal throughput in a modulation scheme having a one-level smaller multi-value number than that in a current modulation scheme. When "L>random number value" is determined in Step S19 , the process returns to Step S10 and the modulation scheme request unit 170 requests a modulation scheme based on the quality of received signals estimated again in the signal quality estimating unit 140. Otherwise, the modulation scheme request unit 170 maintains a current modulation scheme for a while or requests a modulation scheme based on throughput estimated from the retransmission rate.

It is noted here that, when a retransmission occurs, the repeated control process possibly entails overhead. Taking account of this overhead, ideal throughout in a modulation scheme having a one-level smaller multi-value number may be multiplied by correction coefficient $\alpha$ to compare in determination in Step S12. This $\alpha$ relates to a retransmission protocol, the amount of overhead and the like for a concrete system, and $\alpha$ can be 1.05 to 1.1.

It is possible, in the embodiment, to select the most adequate modulation scheme so that throughput is maximal by constantly following a current propagation state as above, which is suitable when high throughput and efficient transmission are required such as in data communication or the like.

The invention has been described as above as to the case in which the communication method of the invention is carried out as an apparatus. However, the communication method can be attained as software, namely a program or a storage medium with a program recorded. It will be appreciated that these also fall within the scope of the invention.

Although the invention has been described above with reference to several drawings and embodiments, it is noted that those skilled in the art will easily make various modifications based on the invention. Therefore, it is noted that these modifications are included within the scope of the invention. For example, functions performed in each member, step or the like can be rearranged so as not to be logically inconsistent, and it is further possible to combine a plurality of members or steps into one or to divide the same.

**Claims**

1. A wireless communication method for a wireless communication apparatus to communicate wirelessly with a corresponding wireless communication apparatus with adaptively selecting a modulation scheme from a plurality of modulation schemes, comprising:

   a step of grasping a quality of a received signal;
   a step of selecting a first modulation scheme based on the grasped quality of the received signal;
   a step of calculating a retransmission rate of received signals in the first modulation scheme;
   a step of determining an estimated throughput from the calculated retransmission rate based on relations between throughput and retransmission rate;
   a step of comparing the estimated throughput with a throughout in a second modulation scheme having a smaller multi-value number than that in the first modulation scheme; and
   a step of performing wireless communication in either the first modulation scheme or the second modulation scheme depending on the comparison result.

2. The wireless communication method according to claim 1, wherein wireless communication is performed in the second modulation scheme when the comparison result shows that the estimated Throughput is lower than the maximum throughput in the second modulation scheme.

3. A wireless communication apparatus for performing wireless communication with a corresponding wireless communication apparatus with adaptively selecting a modulation scheme from a plurality of modulation schemes, comprising

   a signal quality grasping unit grasping a quality of a received signal based thereon;
   a first selection unit selecting a first modulation scheme based on the quality of the received signal grasped by the signal quality grasping unit;
   a retransmission rate calculation unit calculating a retransmission rate of received signals in the first modulation scheme;
   a throughput estimating unit determining an estimated throughput from the retransmission rate calculated by the retransmission rate calculation unit based on relations between throughput and retransmission rate;
   a comparison unit comparing the estimated throughput estimated by the throughput estimating unit with a throughput in a second modulation scheme having a smaller multi-value number than that in the first modulation scheme; and
   a second selection unit selecting either the first modulation scheme or the second modulation scheme based on the comparison result.

# FIG. 1

# FIG. 2

# FIG. 3

Request modulation scheme according to estimation result in signal quality estimating unit and set k=0, j=0 — S10

Input estimated throughput in requested modulation scheme and set k=k+1 — S11

S12 — Is throughput lower than throughput in modulation scheme having smaller multi-value number ?

No → Set j=j+1 (S14) → K=1 ? (S15)

Yes → L>Random number ? (S19)

No → Set L=L+1 (S18)

S16 — j=1 ?  No → Set L=L+1

Yes (S12) → Request modulation scheme having smaller multi-value number and set j=0 (S13)

S17 — Generate random numbers and set L=0

## INTERNATIONAL SEARCH REPORT

| International application No. |
|---|
| PCT/JP2007/070533 |

**A. CLASSIFICATION OF SUBJECT MATTER**
*H04L27/00*(2006.01)i

According to International Patent Classification (IPC) or to both national classification and IPC

**B. FIELDS SEARCHED**

Minimum documentation searched (classification system followed by classification symbols)
H04L27/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
IEEE

**C. DOCUMENTS CONSIDERED TO BE RELEVANT**

| Category* | Citation of document, with indication, where appropriate, of the relevant passages | Relevant to claim No. |
|---|---|---|
| A | WO 2004/107695 A1 (NEC Corp.), 09 December, 2004 (09.12.04), Abstract & US 2006/0129567 A1 & GB 2413250 A | 1-3 |
| A | JP 2005-244858 A (Kyocera Corp.), 08 September, 2005 (08.09.05), Abstract (Family: none) | 1-3 |
| A | JP 2005-86304 A (Fujitsu Ltd.), 31 March, 2005 (31.03.05), Abstract & US 2005/0053038 A1 & EP 1513282 A2 | 1-3 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 November, 2007 (27.11.07) | 04 December, 2007 (04.12.07) |

| Name and mailing address of the ISA/<br>Japanese Patent Office | Authorized officer |
|---|---|
| Facsimile No. | Telephone No. |

Form PCT/ISA/210 (second sheet) (April 2007)

**EP 2 079 211 A1**

## REFERENCES CITED IN THE DESCRIPTION

### Patent documents cited in the description

- JP 2006294238 A

- JP 2005318533 A